Europäisches Patentamt

European Patent Office

Office européen des brevets

(11) Veröffentlichungsnummer: **0 350 598**
**A2**

## EUROPÄISCHE PATENTANMELDUNG

(21) Anmeldenummer: **89108994.8**

(51) Int. Cl.⁴: **B42F 17/08**

(22) Anmeldetag: **19.05.89**

(30) Priorität: **11.07.88 DE 8808900 U**

(43) Veröffentlichungstag der Anmeldung:
**17.01.90 Patentblatt 90/03**

(84) Benannte Vertragsstaaten:
**AT BE CH DE ES FR GB GR IT LI LU NL SE**

(71) Anmelder: **DATA SUPPLIES PRODUCTS GMBH**
**Sperlingstrasse 26**
**D-4800 Bielefeld(DE)**

(72) Erfinder: **Rätke, Günter**
**Elbblick 76**
**D-2093 Stelle(DE)**
Erfinder: **Robles Pérez, Bartolomé**
**Hartlager Weg 49a**
**D-4800 Bielefeld 1(DE)**

(74) Vertreter: **Schmidt-Bogatzky, Jürgen, Dr. Ing.**
**et al**
**Schlossmühlendamm 4**
**D-2100 Hamburg 90(DE)**

(54) **Klappbehälter.**

(57) Die Erfindung betrifft ein Klappbehälter zur Aufbewahrung flächiger Gegenstände wie Karteikarten, Disketten und dergleichen in einem einseitig offen Bodenteil, das mittels eines an einer Seitenwand des Bodenteils klappbar gelagerten Deckels verschließbar ist. Der Deckel 3 ist als oberer Behälterabschnitt 8 ausgebildet und in mittlerer Höhe der einen Seitenwand 6 derart angelenkt, daß bei aufgeklapptem Deckel 3 dessen oberer Seitenwandabschnitt 9 an dem zugehörigen Seitenwandabschnitt 10 des Bodenteils 2 anliegt. Die Kopfplatte 11 des Deckels 3 ist dann in der gleichen horizontalen Ebene wie die Bodenplatte 12 des Bodenteils 2 ausgerichtet. Auf der Innenfläche 13 der Kopfplatte 11 sind Haltemittel 14 für Disketten, Karteikarten und dergleichen ausgebildet.

Die Erfindung betrifft einen Klappbehälter zur Aufbewahrung flächiger Gegenstände wie Karteikarten, Disketten und dergleichen in einem einseitig offenen Bodenteil, das mittels eines an einer Seitenwand des Bodenteils klappbar gelagerten Deckels verschließbar ist.

Es ist bekannt, z.B. Disketten in Klappbehältern aufzubewahren und bei Bedarf aus diesen zu entnehmen. Hierbei hat es sich gezeigt, daß in Fällen, in denen zur Abwicklung einer Aufgabe mehrere Disketten erforderlich sind, die gerade nicht benötigten Disketten auf der Arbeitsplatte herumliegen. Dies hat den Nachteil, daß diese Disketten in z.B. Schriftstücke hineingeraten können und dadurch erst nach längerer Suche wiedergefunden werden oder aber aus Versehen in Papierkörbe eingebracht oder anderweitig beschädigt werden.

Die Aufgabe der Erfindung besteht darin, einen Klappbehälter der eingangs genannten Art so weiterzubilden, daß er sowohl zur Aufbewahrung von Disketten, Karteikarten und dergleichen verwendet werden kann, aber auch eine organisationsgerechte Zwischenlagerung von zu benutzenden Disketten, Karteikarten und dergleichen gestattet.

Erfindungsgemäß erfolgt die Lösung der Aufgabe durch die Merkmale des kennzeichnenden Teils des Anspruchs 1.

Weitere Merkmale der Erfindung werden in den abhängigen Ansprüchen beschrieben und nachstehend anhand des in den Zeichnungen dargestellten Ausführungsbeispiels näher erläutert. Es zeigt:

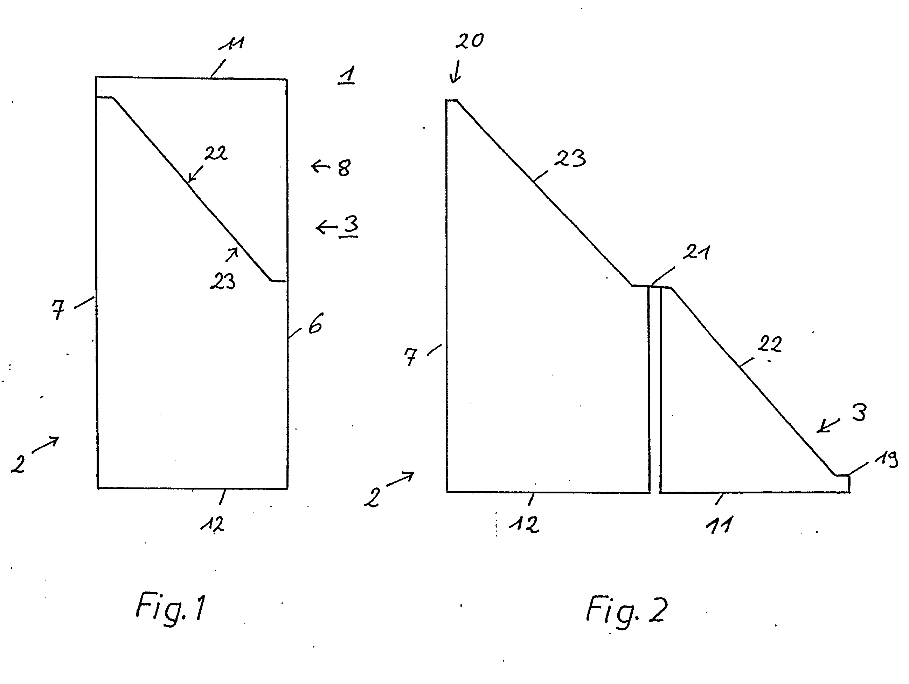

Fig. 1 einen Klappbehälter in einer Seitenansicht in geschlossener Stellung,

Fig. 2 den Klappbehälter nach Fig. 1 in einer Seitenansicht in geöffneter Stellung,

Fig. 3 den Klappbehälter nach Fig. 1 in aufgeklappter Stellung in der Seitenansicht im Schnitt,

Fig. 4 den Klappbehälter nach Fig. 1 in aufgeklappter Stellung in der Draufsicht,

Fig. 5 eine weitere Ausbildung eines Klappbehälters in und 6 aufgeklappter Stellung in der Seitenansicht im Schnitt und in einer Draufsicht.

Der Klappbehälter 1 besteht aus einem Bodenteil 2 und einem Deckel 3. Der Deckel 3 ist an der Seitenwand 6 des Bodenteils 2 mittels eines Gelenks 21 mit dem Bodenteil 2 verbunden. Das Gelenk 21 erstreckt sich über die Breite der Seitenwand 6 und kann z.B. ein mit dem Bodenteil 2 und dem Deckel 3 verbundener Klebstreifen sein. Es ist aber auch möglich, das Bodenteil 2 und den Deckel 3 einstückig auszubilden und mittels eines als Gelenk 21 dienenden lippenförmigen Streifens 25 zu verbinden. Das Gelenk 21 ist in einer derartigen Höhe an der Seitenwand 6 ausgebildet, daß bei aufgeklapptem Deckel dessen Kopfplatte 11 in einer Ebene mit der Bodenplatte 12 des Bodenteils 2 liegt. Ferner liegt der obere Seitenwandabschnitt 9 des Deckels 3 an dem unteren Seitenwandabschnitt 10 des Bodenteils 2 an, der bei dem dargestellten Klappbehälter 1 durch die Seitenwand 6 gebildet wird.

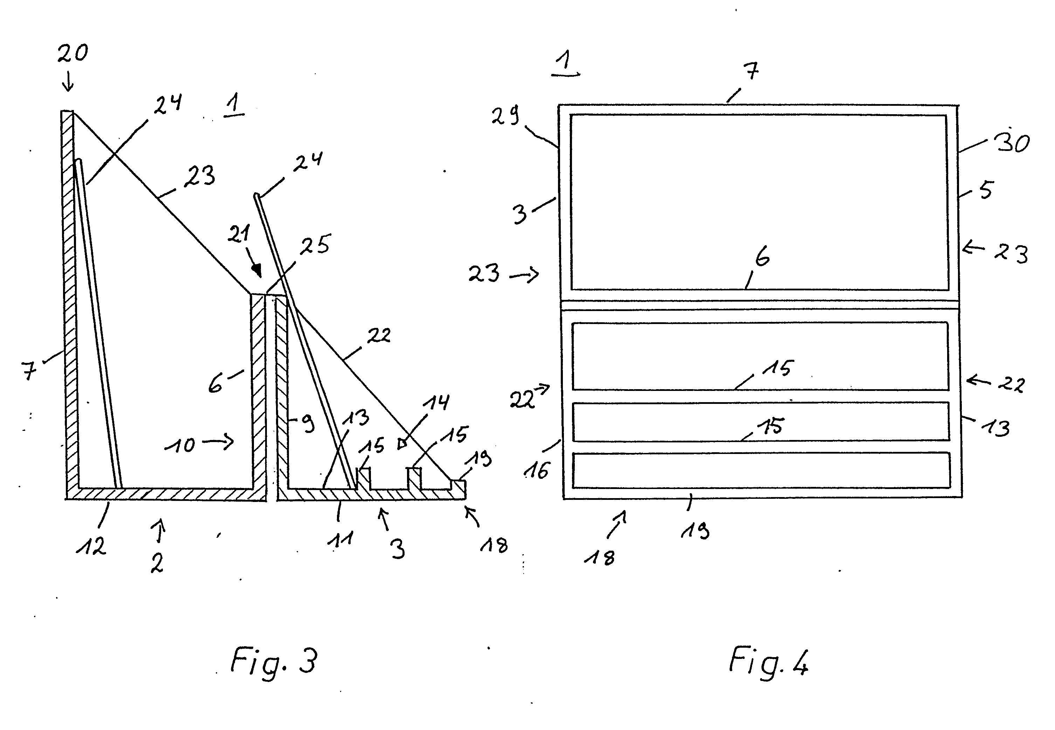

Auf der Innenfläche 13 der Kopfplatte 11 des Deckels 3 sind Haltemittel 14 für Disketten, Karteikarten und dergleichen ausgebildet. Wie in Fig. 3 und 4 dargestellt, sind die Haltemittel 14 als mit der Kopfplatte 11 verbundene Stege 15 ausgebildet. Die Stege 15 erstrecken sich über die gesamte Breite der Kopfplatte 11 und sind mit den Seitenwänden 16, 17 des Deckels 3 verbunden. Hierbei sind die Stege 15 parallel zueinander und rechtwinklig zu den Seitenwänden 16, 17 ausgerichtet.

An der äußeren Begrenzungskante 18 der Kopfplatte 11 ist ein sich zwischen den Seitenwänden 16, 17 des Deckels 3 erstreckender Steg 19 ausgebildet, der bei geschlossenem Deckel 3 auf dem oberen Endabschnitt 20 der Rückwand 7 des Bodenteils 2 aufliegt. Hierdurch ist es möglich, sowohl die Stege 15 wie auch den Steg 19 zur rutschfesten Ablage von Disketten, Karteikarten oder dergleichen in dem Deckel 3 zu verwenden.

Beispielsweise ist dies in Fig. 3 dargestellt. Eine Diskette 24 befindet sich in dem Bodenteil 2 in bekannter Weise. Eine weitere Diskette 24 befindet sich in dem Deckel 3 und ist an einem der Stege 15 abgestützt. Da durch den aufgeklappten Deckel 3 die Standfläche des Klappbehälters 1 vergrößert ist, kann dieser umkippen. Die spezielle Ausbildung des Deckels 3 für den Klappbehälter 1 stellt somit eine äußerst vorteilhafte Organisationshilfe für Personen dar, die mit verschiedenen Disketten, Karteikarten und dergleichen arbeiten müssen.

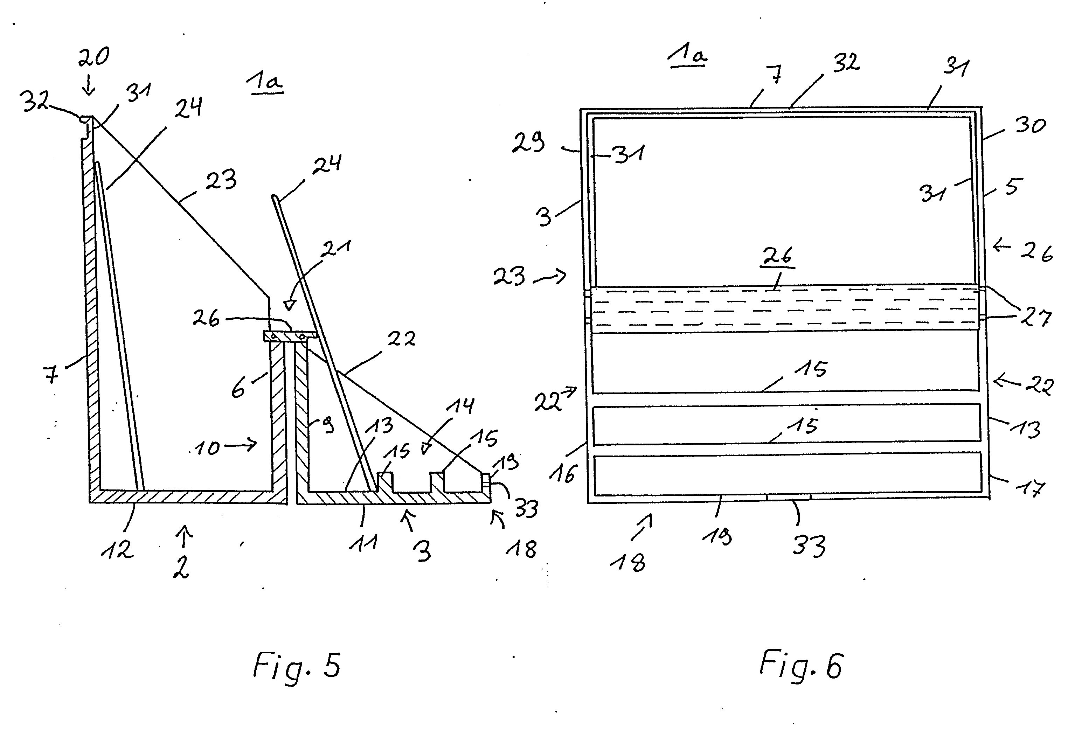

In den Figuren 5 und 6 ist ein Klappbehälter 1a dargestellt, dessen Gelenk 21 als Gelenkplatte 26 ausgebildet ist. An den Randseiten der Gelenkplatte 26 sind Zapfen 27 ausgebildet, die in Durchbrechungen 28 der Seitenwände 16, 17 des Deckels 3 und der Seitenwände 29, 30 des Bodenteils 2 drehbar gelagert sind. Die Gelenkplatte 26 ist so ausgebildet, daß bei aufgeklapptem Deckel der Seitenwandabschnitt 10 des Bodenteils 2 und der obere Seitenwandabschnitt 9 des Deckels 3 aneinander anliegen. An den Endabschnitten der Seitenwände 29, 30 und der Rückwand 7 des Bodenteils 2 ist jeweils ein Steg 31 ausgebildet. Bei geschlossenem Klappbehälter 1a greifen die Seitenwände 16, 17 sowie der Steg 19 an der äußeren Begrenzungskante 18 des Deckels 3 über die Stege 31. Hierdurch ist ein ausreichend staubdichter Verschluß des Klappbehälters 1a gewährleistet. Um ein ungewolltes Öffnen des Deckels 3 zu verhindern, ist ein Klemmverschluß vorgesehen. Dieser besteht aus einem Zapfen 32, der an dem Steg 31 der Rückwand 7 des Bodenteils 2 angeformt ist. In dem Steg 19 des Deckels 3 ist eine Ausnehmung 33 ausgebildet, in die der Zapfen 32 bei geschlossenem Deckel 3 eingeführt ist. Da in dieser Stellung des Deckels 3 die Gelenkplatte 26 in Ausnehmungen der Seitenwände 29, 30 des Bodenteils 2 anliegt, ergibt sich bei geschlossenem Deckel eine glatte Außenfläche der Seitenwand 6 ohne störende Vorsprünge oder dergleichen.

## Ansprüche

1. Klappbehälter zur Aufbewahrung flächiger Gegenstände wie Karteikarten, Disketten und dergleichen in einem einseitig offenen Bodenteil, das mittels eines an einer Seitenwand des Bodenteils klappbar gelagerten Deckels verschließbar ist, dadurch gekennzeichnet, daß der Deckel (3) als oberer Behälterabschnitt (8) ausgebildet und in mittlerer Höhe einer Seitenwand (6) derart angelenkt ist, daß bei aufgeklapptem Deckel (3) dessen oberer Seitenwandabschnitt (9) an dem zugehörigen Seitenwandabschnitt (10) des Bodenteils (2) anliegt und die Kopfplatte (11) des Deckels (3) in der gleichen horizontalen Ebene wie die Bodenplatte (12) des Bodenteils (2) ausgerichtet ist und daß auf der Innenfläche (13) der Kopfplatte (11) Haltemittel (14) für Disketten, Karteikarten und dergleichen ausgebildet sind.

2. Klappbehälter nach Anspruch 1, dadurch gekennzeichnet, daß die Haltemittel (14) als an der Innenfläche (13) der Kopfplatte (11) angeordnete Profilstücke ausgebildet sind.

3. Klappbehälter nach Anspruch 1 und 2, dadurch gekennzeichnet, daß die Haltemittel (14) als mit der Kopfplatte (11) verbundene Stege (15) ausgebildet sind.

4. Klappbehälter nach Anspruch 3, dadurch gekennzeichnet, daß die Stege (15) sich über die gesamte Breite der Kopfplatte (11) erstreckend ausgebildet und mit den Seitenwänden (16, 17) des Deckels (3) verbunden sind.

5. Klappbehälter nach Anspruch 1 bis 4, dadurch gekennzeichnet, daß die Stege (15) parallel zueinander und rechtwinklig zu den Seitenwänden (16, 17) des Deckels (3) ausgerichtet sind.

6. Klappbehälter nach Anspruch 1 bis 5, dadurch gekennzeichnet, daß an der äußeren Begrenzungskante (18) der Kopfplatte (11) ein sich zwischen den Seitenwänden (16, 17) des Deckels (3) erstreckender Steg (19) ausgebildet ist, der bei geschlossenem Deckel (3) auf dem oberen Endabschnitt (20) der Rückwand (7) des Bodenteils (2) aufliegt.

7. Klappbehälter nach Anspruch 1 bis 6, dadurch gekennzeichnet, daß das den Deckel (3) mit dem Bodenteil (2) verbindende Gelenk (21) als mit dem Seitenwandabschnitt (10) des Bodenteils (2) und dem oberen Seitenwandabschnitt (9) des Deckels (3) verbundener lippenförmiger Streifen (25) ausgebildet ist.

8. Klappbehälter nach Anspruch 1 bis 6, dadurch gekennzeichnet, daß das den Deckel (3) mit dem Bodenteil (2) verbindende Gelenk (21) als Gelenkplatte (26) mit randseitig angeordneten Zapfen (27) ausgebildet ist, die in Durchbrechungen (28) der Seitenwände (16, 17; 29, 30) des Deckels (3) und des Bodenteils (2) gelagert sind.

9. Klappbehälter nach Anspruch 1 bis 8, dadurch gekennzeichnet, daß an den Endabschnitten der Seitenwände (29, 30) und der Rückwand (7) des Bodenteils (2) ein Steg (31) ausgebildet ist, der bei geschlossenem Klappbehälter (1a) von den Seitenwänden (16, 17) und dem Steg (19) an der äußeren Begrenzungskante (18) des Deckels (3) übergriffen wird.

10. Klappbehälter nach Anspruch 9, dadurch gekennzeichnet, daß der Deckel (3) an dem Bodenteil (2) mittels eines Klemmverschlusses lösbar verriegelbar ist.

11. Klappbehälter nach Anspruch 10, dadurch gekennzeichnet, daß an dem Steg (31) der Rückwand (7) des Bodenteils (2) ein Zapfen (32) ausgebildet ist, der in eine Ausnehmung (33) im Steg (19) des Deckels (3) einführbar ist.

Fig.1

Fig.2

EP 0 350 598 A2

Fig. 3

Fig. 4

EP 0 350 598 A2

Fig. 5

Fig. 6

EP 0 350 598 A2